# EUROPEAN PATENT APPLICATION

(11) **EP 4 606 874 A1**
(43) Date of publication of application: **27.08.2025**
(21) Application number: 25159085.7
(22) Date of filing: 20.02.2025
(51) Int. Cl.: C10B 47/44, C10B 53/02, F23G 5/027, F23G 5/12, F23G 5/50

(54) **SYSTEM AND METHOD FOR PYROLYSIS PRODUCTION OF BIOCHAR**

(30) Priority: 20.02.2024 SE 2430082
(71) Applicant: Nikolic, Boban, 26333 Höganäs (SE)
(72) Inventor: Nikolic, Boban, 26333 Höganäs (SE)
(74) Representative: Barker Brettell Sweden AB

(57) **Abstract**

In accordance with one or more embodiments herein, an arrangement 300 for biochar pyrolysis is provided. The arrangement 300 comprises: an incinerator plant 100, comprising a furnace 120, where furnace fuel introduced through a furnace fuel input 130 is burned, arranged inside an incinerator chamber 110, and a heat converter 150, used for storing the heat generated by burning the furnace fuel; and a biochar pyrolysis reactor chamber 200, arranged horizontally and at least partly inside the incinerator chamber 110, above the furnace 120, so that it is evenly heated by heat rising from the furnace 120. Biochar base material is transported horizontally through the biochar pyrolysis reactor chamber 200 in such a way that the biochar base material during said transport is evenly heated by the heat rising from the furnace 120 when the furnace fuel is burned while being transported through the furnace 120, thereby causing pyrolysis of the biochar base material, and outputting biochar through a biochar output 220, and syngas through a syngas output 230.

## Description

### TECHNICAL FIELD

The present disclosure relates generally to arrangements and methods for biochar pyrolysis.

### BACKGROUND

Biochar may be defined as the solid material obtained from the thermochemical conversion of biomass in an oxygen-limited environment. Biochar is promoted for its potential to improve soil properties, fertility and carbon sequestration in soil, while also producing renewable energy.

Pyrolysis is the thermochemical conversion of primarily dry organic materials (i.e. biomass with a moisture content below 10%) into biochar and syngas. In a typical pyrolysis reactor, the syngas is fed back for heating the baking biomass.

SE541605, SE2230025 and CN208791562U describe arrangements for biochar production.

US2020048559 describes an apparatus for hot water and electricity production, in which fuel is turned into pyrolyzed fuel and syngas, and the pyrolyzed fuel is fed back for heating the process.

### PROBLEMS WITH THE PRIOR ART

Syngas is an excellent energy source, which may e.g. be used instead of natural gas for many purposes. It is therefore desirable to find a more flexible way of heating the baking biomass in a pyrolysis reactor than to use the syngas for this.

### SUMMARY

The above described problem is addressed by the claimed arrangement for biochar pyrolysis. The arrangement preferably comprises: an incinerator plant, comprising a furnace, where furnace fuel introduced through a furnace fuel input is burned, arranged inside an incinerator chamber, and a heat converter, used for storing the heat generated by burning the furnace fuel; and a biochar pyrolysis reactor chamber, arranged substantially horizontally and at least partly inside the incinerator chamber, above the furnace, so that it is evenly heated by heat rising from the furnace. Biochar base material is preferably arranged to be transported horizontally through the biochar pyrolysis reactor chamber in such a way that the biochar base material during said transport is evenly heated by the heat rising from the furnace when the furnace fuel is burned while being transported through the furnace, thereby causing pyrolysis of the biochar base material, and outputting biochar through a biochar output, and syngas through a syngas output, to be used for other purposes than heating the biochar pyrolysis reactor chamber.

The above described problem is further addressed by the claimed method for biochar pyrolysis. The method preferably comprises: arranging a biochar pyrolysis reactor chamber substantially horizontally and at least partly inside an incinerator chamber of an incinerator plant, above a furnace arranged inside the incinerator chamber; burning furnace fuel, introduced through a furnace fuel input, in the furnace; evenly heating the biochar pyrolysis reactor chamber using heat rising from the furnace when the furnace fuel is burned while being transported through the furnace; transporting biochar base material horizontally through the biochar pyrolysis reactor chamber in such a way that the biochar base material during said transport is evenly heated by the heat rising from the furnace when the furnace fuel is burned, thereby causing pyrolysis of the biochar base material; outputting biochar through a biochar output, and syngas through a syngas output, to be used for other purposes than heating the biochar pyrolysis reactor chamber; and storing the remaining heat generated by burning the furnace fuel, using a heat converter of the incinerator plant.

This arrangement and method provide a more flexible way of heating the baking biomass in a pyrolysis reactor than to use the syngas for this, by installing the pyrolysis reactor chamber at least partly inside an incinerator chamber of an incinerator plant. The furnace fuel is preferably not biochar, since the purpose of the system and method is to output biochar and syngas for other uses than heating the biochar pyrolysis reactor chamber. The arrangement and method therefore comprise no transporting of biochar into the furnace.

In embodiments, the biochar base material is transported both horizontally and vertically through the biochar pyrolysis reactor chamber. The transport does not have to take place only in the horizontal direction, as long as the biochar base material during the transport is heated by the heat rising from the furnace when the furnace fuel is burned.

The biochar pyrolysis reactor chamber does not have to be exactly horizontal - a vertical tilt of e.g. around 5 degrees may make it easier to control the output of water vapor from drying the biochar base material before the pyrolysis process, and also to control the syngas output.

In embodiments, the biochar pyrolysis reactor chamber is cylindrical, and the biochar base material is transported through the cylindrical biochar pyrolysis reactor chamber using a material screw. This is a simple way of enabling transport of the biochar base material in a horizontal direction.

In embodiments, the arrangement comprises a control system, arranged to control the feed of furnace fuel from the furnace fuel input to the furnace based on an output heat requirement from the heat converter. This enables the burning of the correct amount of furnace fuel at any given point, based on the output heat requirement (which may vary over time). The control may in embodiments be based also on the heat requirement of the biochar pyrolysis process.

In embodiments, the control system is arranged to, in situations where the control of the feed of furnace fuel from the furnace fuel input to the furnace does not suffice to reach the output heat requirement from the heat converter, control the syngas output to transport at least a part of the syngas from the biochar pyrolysis process into the furnace.

In embodiments, the control system is arranged to control the transport speed of the biochar base material through the biochar pyrolysis reactor chamber based on the properties of the biochar base material. This e.g. enables pyrolysis of wet biochar base material, such as e.g. sludge, since if the biochar base material has a high moisture content, a slow transport through the biochar pyrolysis reactor chamber allows it to dry before the pyrolysis process begins.

In embodiments, the control system is arranged to control both the feed of furnace fuel from the furnace fuel input to the furnace (which affects the temperature), and the transport speed of the biochar base material through the biochar pyrolysis reactor chamber (which affects the duration), based on the desired output of the biochar pyrolysis process. Both the temperature and the duration of the pyrolysis process greatly affect its output. The control system may also be arranged to, instead of outputting the flue gases through the chimney, route the flue gases back into the furnace. This may be used for adjusting the temperature of the biochar pyrolysis reactor chamber, and especially preventing it from becoming too hot.

Since it may be desirable to control both the pyrolysis process and the output heat from the heat converter, the control system may be arranged to control the various parameters to achieve both the desired output of the biochar pyrolysis process and the desired output heat from the heat converter.

In embodiments, the furnace comprises a fire grate. This is a reliable type of furnace.

In embodiments, the furnace of the incinerator plant comprises a preheating zone for drying the furnace fuel before a main combustion zone. This enables the drying of the furnace fuel before it is burned.

The term "horizontal" in this disclosure covers any horizontal extension, including also vertically tilted horizontal extensions.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 schematically illustrates an embodiment of a prior art incinerator plant.
Figs. 2A-B schematically illustrate embodiments of an arrangement for biochar pyrolysis, in accordance with one or more embodiments described herein.
Fig. 3 schematically illustrates how the biochar pyrolysis process parameters affect the product distribution of the process output.
Fig. 4 schematically illustrates a method for biochar pyrolysis, in accordance with one or more embodiments described herein.

Embodiments of the present disclosure and their advantages are best understood by referring to the detailed description that follows. It should be appreciated that like reference numerals are used to identify like elements illustrated in one or more of the figures.

### DETAILED DESCRIPTION

Pyrolysis is the thermochemical conversion of primarily dry organic materials (i.e. biomass with a moisture content below 10%) into biochar and syngas. The syngas is typically fed back for heating the baking biomass. However, syngas is an excellent energy source, which may e.g. be used instead of natural gas for many purposes. The present disclosure provides a more flexible way than using the syngas for heating the baking biomass in a pyrolysis reactor, by instead using a furnace of an incinerator plant.

An incinerator plant is typically able to incinerate a broader range of material than the dry organic material typically used to produce biochar. Incinerator plants which are able to incinerate non-dry biomass typically comprise a preheating zone, for drying the biomass before a main combustion zone. The output of such an incinerator plant is typically hot water and/or steam.

If a pyrolysis reactor in which the biochar base material is transported horizontally is installed inside an incinerator chamber of an incinerator plant, the biochar base material could during the transport be heated by the heat rising from the furnace when the furnace fuel is burned. This enables the valuable syngas to be stored and used for other purposes.

Another advantage of installing a pyrolysis reactor inside an incinerator chamber of an incinerator plant is that the biochar pyrolysis process becomes more flexible. A biochar pyrolysis process where the syngas is fed back for heating the baking biomass has limited flexibility, since the process only runs as long as there is enough syngas, and the syngas is only produced as long as the process runs. The same applies to a pyrolysis process where the pyrolyzed fuel is fed back for heating the process. By separating the heating of the biochar pyrolysis process from the output of the biochar pyrolysis process, the biochar pyrolysis process becomes more flexible. This also allows a broader range of biochar base materials to be used.

The present disclosure relates generally to arrangements and methods for biochar pyrolysis. Embodiments of the disclosed solution are presented in more detail in connection with the figures.

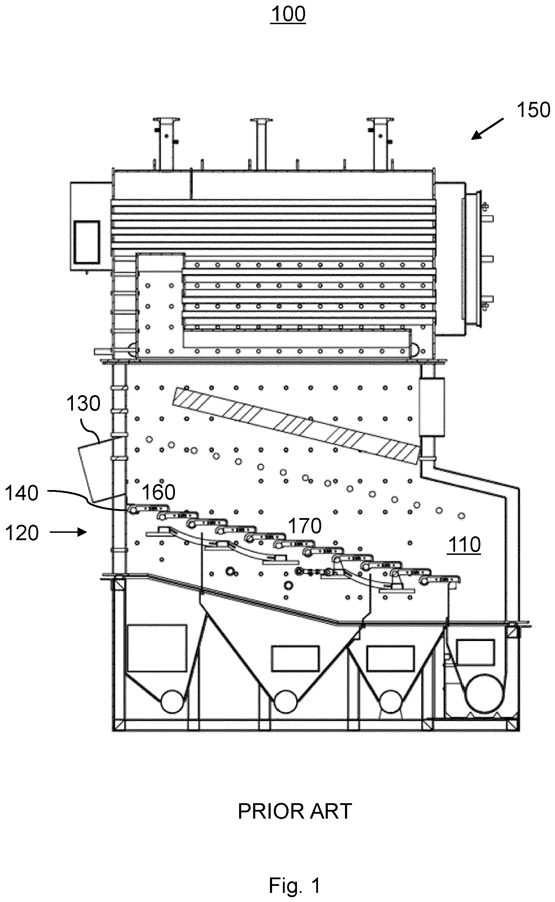

Fig. 1 schematically illustrates an embodiment of a prior art incinerator plant 100. The incinerator plant 100 comprises a furnace 120, where furnace fuel is burned, and a heat converter 150, used for storing the heat generated by burning the furnace fuel. The furnace 120 is arranged inside an incinerator chamber 110 of the incinerator plant 100, where the heat generated by burning the furnace fuel is collected. The heat converter 150 may be arranged either inside the incinerator chamber 110, or at least partly outside the incinerator chamber 110, as long as it is able to store the heat generated by burning the furnace fuel. When the heat generated by burning the furnace fuel has been stored using the heat converter 150, the flue gases are typically output through a chimney.

The heat converter 150 typically stores the heat in the form of hot water, at up to e.g. 165°C, and/or steam, at up to e.g. 80 bar, but other means, such as e.g. hot oil, may also be used. The heat converter 150 may e.g. take the form of a boiler, but may comprise a plurality of different heat converting arrangements, arranged together or in different locations of the incinerator plant 100. Such heat converting arrangements may e.g. comprise heat exchangers arranged in the walls of the incinerator chamber 110. The stored heat from the heat converter 150 is typically used for heating premises and/or processes.

The furnace 120 of the illustrated incinerator plant 100 comprises a furnace fuel input 130. The incinerator plant 100 may comprise a control system, arranged to control the feed of furnace fuel from the furnace fuel input 130 to the furnace 120 based on an output heat requirement from the heat converter 150.

The illustrated incinerator plant 100 is a fire grate type incinerator plant, which means that the furnace 120 comprises a fire grate 140 (the incinerator plant 100 may however be any type of incinerator plant, and the furnace 120 may thus take any suitable form, including being a fluidized bed). Fire grate type incinerator plants are described e.g. in SE1951417A1 and US2013192500. A fire grate 140 typically has an inclining grate track comprising a plurality of grate steps arranged one above the other in the manner of roofing tiles. Each step may e.g. comprise a plurality of grate bars arranged in parallel, with gaps between them for the supply of air. The grate bars together form a grate layer, on which the furnace fuel is transported through the furnace 120. For movement of the furnace fuel through the furnace 120, the grate bars on e.g. every other step may be horizontally movable back and forth, thus transporting the furnace fuel obliquely downwards along the fire grate 140 from a preheating zone 160 (for drying the furnace fuel) to a main combustion zone 170, and onwards to a post-combustion zone. In such an incinerator plant 100, temperatures of e.g. 800 to 1300°C may be produced by the furnace 120.

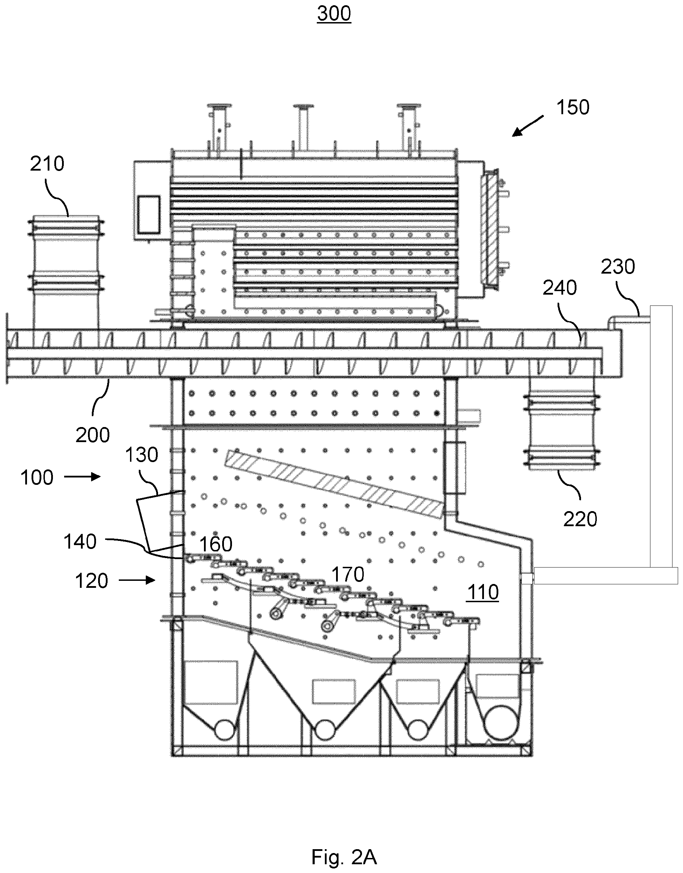

Figs. 2A-B schematically illustrate embodiments of an arrangement 300 for biochar pyrolysis. The illustrated arrangement 300 is based on the prior art incinerator plant 100 of Fig. 1, but a cylindrical biochar pyrolysis reactor chamber 200 has been arranged partially inside the incinerator chamber 110. In this way, the biochar pyrolysis reactor chamber 200 will be heated by heat rising from the furnace 120 when furnace fuel is burned. The biochar pyrolysis reactor chamber 200 is preferably arranged above the furnace 120, but in embodiments where the hot flue gases rising from the furnace 120 are not led directly up to the heat converter 150, the biochar pyrolysis reactor chamber 200 may be arranged anywhere along the way that the hot flue gases are routed from the furnace 120 to the heat converter 150.

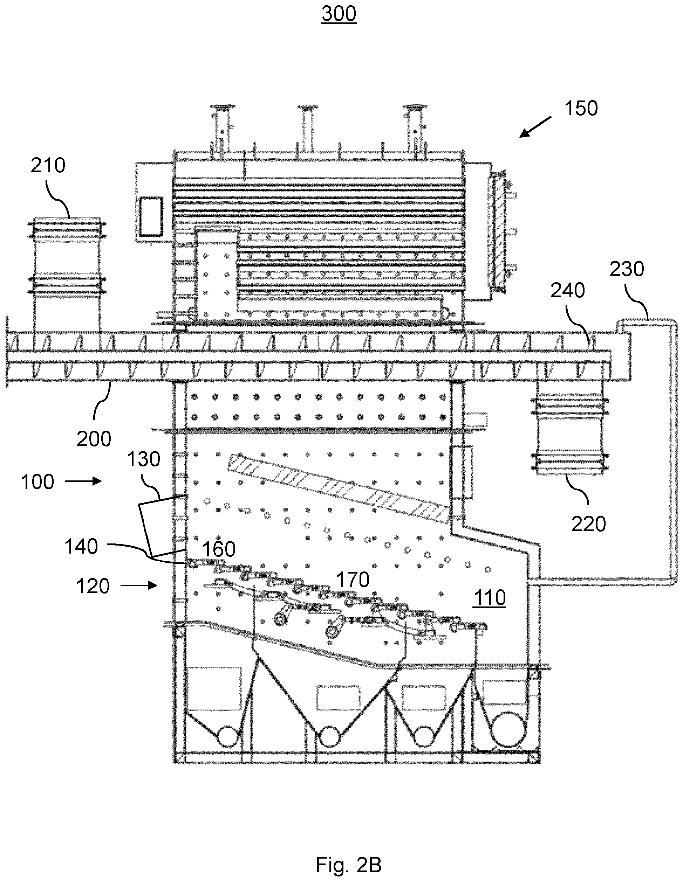

Biochar base material may be input through a biochar base material input 210, and transported through the biochar pyrolysis reactor chamber 200 in such a way that it during said transport is heated by the heat rising from the furnace 120 when the furnace fuel is burned. Biochar may then be output through a biochar output 220, and syngas may be output through a syngas output 230 (where also water vapor from drying the biochar base material before the pyrolysis process may be output). The syngas is preferably stored to be used as a separate energy source, but may, in situations where the furnace fuel input through the furnace fuel input 130 to the furnace 120 does not suffice to reach the output heat requirement from the heat converter 150, be fed back into the incinerator chamber 110, to be burned by the furnace 120 (as illustrated in Fig. 2B). The syngas that is output through the syngas output 230 typically has a temperature of 400-1000°C, and it is desirable to convert also this heat to usable energy. The syngas may therefore be run through one or more heat exchangers to bring its temperature down to e.g. 20°C. Such heat exchangers may e.g. be connected to the heat converter 150, and e.g. pre-heat the liquid in the heat converter 150. However, other uses of the heat recovered from the syngas are also possible.

This arrangement provides a more flexible way of heating the baking biomass in a pyrolysis reactor chamber 200, by installing the pyrolysis reactor chamber 200 at least partly inside an incinerator chamber 110 of an incinerator plant 100.

The transporting of the biochar base material through the biochar pyrolysis reactor chamber 200 may take place only in the horizontal direction, or be both horizontal and vertical, as long as the biochar base material during the transport is heated by the heat rising from the furnace 120 when the furnace fuel is burned. In the illustrated embodiment, the cylindrical biochar pyrolysis reactor chamber 200 is horizontally arranged above the furnace 120, and transport of the biochar base material is effected using a material screw 240. This is a simple way of enabling transport of the biochar base material in the horizontal direction.

For a cylindrical biochar pyrolysis reactor chamber 200 where transport of the biochar base material is effected using a material screw 240, there is typically a limit to the diameter of the cylinder for the pyrolysis process to be efficient. If very large outputs are required from the biochar pyrolysis process, it may therefore be desirable to arrange a plurality of parallel biochar pyrolysis reactor chambers 200 inside the incinerator chamber 110.

As described above in relation to the prior art incinerator plant 100, the furnace 120 of the incinerator plant 100 preferably comprises a furnace fuel input 130. The arrangement 300 preferably comprises a control system, arranged to control the feed of furnace fuel from the furnace fuel input 130 to the furnace 120 based on an output heat requirement from the heat converter 150. However, since the amount of heat that reaches the heat converter 150 in the above described arrangement 300 for biochar pyrolysis also depends on the biochar pyrolysis process, the control system may be arranged to control the feed of furnace fuel from the furnace fuel input 130 to the furnace 120 also based on the heat requirement of the biochar pyrolysis reactor chamber 200.

In situations where it is not desirable or possible to feed more furnace fuel from the furnace fuel input 130 to the furnace 120, to reach the output heat requirement from the heat converter 150, the control system may be arranged to control the syngas output 230 to transport at least a part of the syngas from the biochar pyrolysis process into the furnace 120, in order to maintain a desired output heat from the heat converter 150.

The control system may in embodiments be arranged to control also the transport speed of the biochar base material through the biochar pyrolysis reactor chamber 200. This may e.g. enable the pyrolysis of wet biochar base material, such as e.g. sludge, since if the biochar base material has a high moisture content, a slow transport through the biochar pyrolysis reactor chamber 200 allows it to dry before the pyrolysis process begins. The control system may thus be arranged to control the transport speed of the biochar base material through the biochar pyrolysis reactor chamber 200 based on the properties of the biochar base material.

Using the disclosed arrangement 300, many different types of biochar base material may be used for the biochar pyrolysis. For example, various types of recirculated low quality biomass may be used, and if the biochar which is produced is not clean enough to be used for agriculture, it may e.g. be used for steel production.

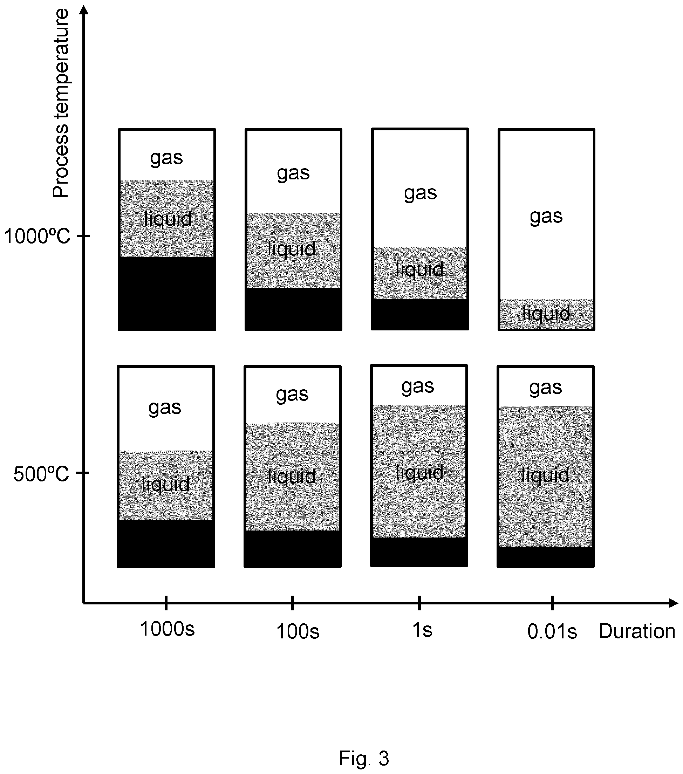

As schematically illustrated in Fig. 3, the biochar pyrolysis process parameters, such as the temperature of the pyrolysis process and the duration of the biochar pyrolysis, greatly affect the output of the biochar pyrolysis process, such as the product distribution of the process output.

The control system may thus in embodiments be arranged to control both the feed of furnace fuel from the furnace fuel input 130 to the furnace 120 (which affects the temperature), and the transport speed of the biochar base material through the biochar pyrolysis reactor chamber 200 (which affects the duration), based on the desired output of the biochar pyrolysis process. The control system may also be arranged to, instead of outputting the flue gases through the chimney, route the flue gases back into the furnace 120. This may be used for adjusting the temperature of the biochar pyrolysis reactor chamber 200, and especially preventing it from becoming too hot.

Since it may be desirable to control both the pyrolysis process and the output heat from the heat converter 150, the control system may be arranged to control the various parameters to achieve both the desired output of the biochar pyrolysis process and the desired output heat from the heat converter 150.

In the illustrated embodiment, the furnace 120 comprises a fire grate 140, which comprises a preheating zone 160 for drying the furnace fuel before the main combustion zone 170. This enables the drying of the furnace fuel before it is burned, which enables the use of wet furnace fuel. The furnace fuel may e.g. be bark and/or wood chips, and may e.g. have a moisture content of 5-60%.

In an exemplary embodiment (provided for illustrative purposes), the furnace fuel is bark, which is fed into the furnace fuel input 130 at a rate of 1500 kg/h. The biochar base material is wood chips, which is fed into the biochar base material input 210 at a rate of 800 kg/h. The heat from the furnace 120 heats the biochar pyrolysis reactor chamber 200 enough to create 240 kg of biochar and 1200 kW of syngas. The remaining heat is converted to 3000 kg/h of steam, or 2000 kWh of hot water, in the heat converter 150.

The illustrated biochar pyrolysis reactor chamber 200 is entirely horizontal, but the biochar pyrolysis reactor chamber 200 may also have a vertical tilt, e.g. a tilt of around 5 degrees. Such a tilt may make it easier to control the direction of the output of water vapor from drying the biochar base material before the pyrolysis process, and also to control the syngas output.

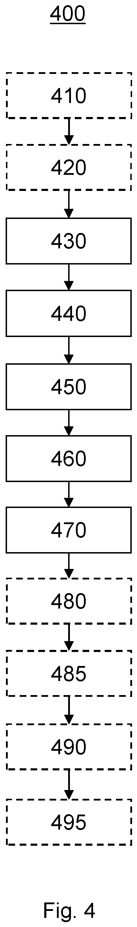

Fig. 4 schematically illustrates a method 400 for biochar pyrolysis. The method 400 may comprise:
Step 420: arranging a biochar pyrolysis reactor chamber 200 horizontally and at least partly inside an incinerator chamber 110 of an incinerator plant 100, above a furnace 120 arranged inside the incinerator chamber 110.
Step 430: burning furnace fuel, introduced through a furnace fuel input 130, in the furnace 120.
Step 440: evenly heating the biochar pyrolysis reactor chamber 200 using heat rising from the furnace 120 when the furnace fuel is burned while being transported through the furnace 120.
Step 450: transporting biochar base material horizontally through the biochar pyrolysis reactor chamber 200 in such a way that the biochar base material during said transport is evenly heated by the heat rising from the furnace 120 when the furnace fuel is burned, thereby causing pyrolysis of the biochar base material.
Step 460: outputting biochar through a biochar output 220, and syngas through a syngas output 230, to be used for other purposes than heating the biochar pyrolysis reactor chamber 200.
Step 470: storing the remaining heat generated by burning the furnace fuel, using a heat converter 150 of the incinerator plant 100.

This method provides a more flexible way of heating the baking biomass in a pyrolysis reactor chamber 200 than to use the syngas for this, by installing the pyrolysis reactor chamber 200 at least partly inside an incinerator chamber 110 of an incinerator plant 100.

The furnace fuel is preferably not biochar, since the purpose of the method 400 is to output biochar and syngas for other uses than heating the biochar pyrolysis reactor chamber. The arrangement and method therefore comprise no transporting of biochar into the furnace.

In embodiments, the transporting 450 comprises transporting the biochar base material both horizontally and vertically through the biochar pyrolysis reactor chamber 200. The transport does not have to take place only in the horizontal direction, as long as the biochar base material during the transport is heated by the heat rising from the furnace 120 when the furnace fuel is burned.

The biochar pyrolysis reactor chamber does not have to be exactly horizontal - a vertical tilt of e.g. around 5 degrees may make it easier to control the output of water vapor from drying the biochar base material before the pyrolysis process, and also to control the syngas output.

In embodiments, the biochar pyrolysis reactor chamber 200 is cylindrical, and the transporting 450 comprises transporting the biochar base material through the cylindrical biochar pyrolysis reactor chamber 200 using a material screw 240. This is a simple way of enabling transport of the biochar base material in a horizontal direction.

The method 400 may further comprise one or more of:
Step 410: arranging the furnace 120 to comprise a fire grate 140. This is a reliable type of furnace.
Step 480: controlling the feed of furnace fuel from the furnace fuel input 130 to the furnace 120 based on an output heat requirement from the heat converter 150. This enables the burning of the correct amount of furnace fuel at any given point, based on the output heat requirement from the heat converter 150 (which may vary over time). The control may in embodiments be based also on the heat requirement of the biochar pyrolysis process. Since it may be desirable to control both the pyrolysis process and the output heat from the heat converter 150, the control system may be arranged to control the various parameters to achieve both the desired output of the biochar pyrolysis process and the desired output heat from the heat converter 150.
Step 485: in situations where the control of the feed of furnace fuel from the furnace fuel input 130 to the furnace 120 does not suffice to reach the output heat requirement from the heat converter 150, controlling the syngas output 230 to transport at least a part of the syngas from the biochar pyrolysis process into the furnace 120.
Step 490: controlling the transport speed of the biochar base material through the biochar pyrolysis reactor chamber 200 based on the properties of the biochar base material. This e.g. enables the pyrolysis of wet biochar base material, such as e.g. sludge, since if the biochar base material has a high moisture content, a slow transport through the biochar pyrolysis reactor chamber 200 allows it to dry before the pyrolysis process begins.
Step 495: controlling both the feed of furnace fuel from the furnace fuel input 130 to the furnace 120 (which affects the temperature), and the transport speed of the biochar base material through the biochar pyrolysis reactor chamber 200 (which affects the duration), based on the desired output of the biochar pyrolysis process. Both the temperature and the duration of the pyrolysis process greatly affect its output, as illustrated in Fig. 3. The control system may also be arranged to, instead of outputting the flue gases through the chimney, route the flue gases back into the furnace 120. This may be used for adjusting the temperature of the biochar pyrolysis reactor chamber 200, and especially preventing it from becoming too hot.

The above steps may be effected in any order that makes technical sense, and some of the steps may be effected simultaneously with each other.

The foregoing disclosure is not intended to limit the present invention to the precise forms or particular fields of use disclosed. It is contemplated that various alternate embodiments and/or modifications to the present invention, whether explicitly described or implied herein, are possible in light of the disclosure. The illustrated incinerator plant 100 is a fire grate type incinerator plant, which means that the furnace 120 comprises a fire grate 140, but the incinerator plant 100 may be any type of incinerator plant, and the furnace 120 may thus take any suitable form, including being a fluidized bed. Accordingly, the scope of the invention is defined only by the claims.

## Claims

1. Arrangement (300) for biochar pyrolysis, the arrangement (300) comprising:
an incinerator plant (100), comprising a furnace (120), where furnace fuel introduced through a furnace fuel input (130) is burned, arranged inside an incinerator chamber (110), and a heat converter (150), used for storing the heat generated by burning the furnace fuel; and
a biochar pyrolysis reactor chamber (200), arranged horizontally and at least partly inside the incinerator chamber (110), above the furnace (120), so that it is evenly heated by heat rising from the furnace (120),
wherein biochar base material is arranged to be transported horizontally through the biochar pyrolysis reactor chamber (200) in such a way that the biochar base material during said transport is evenly heated by the heat rising from the furnace (120) when the furnace fuel is burned while being transported through the furnace (120), thereby causing pyrolysis of the biochar base material, and outputting biochar through a biochar output (220), and syngas through a syngas output (230), to be used for other purposes than heating the biochar pyrolysis reactor chamber (200).

2. Arrangement (300) according to claim 1, wherein the biochar base material is arranged to be transported both horizontally and vertically through the biochar pyrolysis reactor chamber (200).

3. Arrangement (300) according to claim 1 or 2, wherein the biochar pyrolysis reactor chamber (200) is cylindrical, and the biochar base material is arranged to be transported through the cylindrical biochar pyrolysis reactor chamber (200) using a material screw (240).

4. Arrangement (300) according to any one of claims 1-3, further comprising a control system, arranged to control the feed of furnace fuel from the furnace fuel input (130) to the furnace (120) based on an output heat requirement from the heat converter (150).

5. Arrangement (300) according to claim 4, wherein the control system is arranged to, in situations where the control of the feed of furnace fuel from the furnace fuel input (130) to the furnace (120) does not suffice to reach the output heat requirement from the heat converter (150), control the syngas output (230) to transport at least a part of the syngas from the biochar pyrolysis process into the furnace (120).

6. Arrangement (300) according to claim 4 or 5, wherein the control system is arranged to control the transport speed of the biochar base material through the biochar pyrolysis reactor chamber (200) based on the properties of the biochar base material.

7. Arrangement (300) according to any one of claims 4-6, wherein the control system is arranged to control both the feed of furnace fuel from the furnace fuel input (130) to the furnace (120), and the transport speed of the biochar base material through the biochar pyrolysis reactor chamber (200), based on the desired output of the biochar pyrolysis process.

8. Arrangement (300) according to any one of claims 1-7, wherein the furnace (120) comprises a fire grate (140).

9. Method (400) for biochar pyrolysis, the method (400) comprising:
arranging (420) a biochar pyrolysis reactor chamber (200) horizontally and at least partly inside an incinerator chamber (110) of an incinerator plant (100), above a furnace (120) arranged inside the incinerator chamber (110);
burning (430) furnace fuel, introduced through a furnace fuel input (130), in the furnace (120);
evenly heating (440) the biochar pyrolysis reactor chamber (200) using heat rising from the furnace (120) when the furnace fuel is burned while being transported through the furnace (120);
transporting (450) biochar base material horizontally through the biochar pyrolysis reactor chamber (200) in such a way that the biochar base material during said transport is evenly heated by the heat rising from the furnace (120) when the furnace fuel is burned, thereby causing pyrolysis of the biochar base material;
outputting (460) biochar through a biochar output (220), and syngas through a syngas output (230), to be used for other purposes than heating the biochar pyrolysis reactor chamber (200); and
storing (470) the remaining heat generated by burning the furnace fuel, using a heat converter (150) of the incinerator plant (100).

10. Method (400) according to claim 9, wherein the transporting (450) comprises transporting the biochar base material both horizontally and vertically through the biochar pyrolysis reactor chamber (200).

11. Method (400) according to claim 9 or 10, wherein the biochar pyrolysis reactor chamber (200) is cylindrical, and the transporting (450) comprises transporting the biochar base material through the cylindrical biochar pyrolysis reactor chamber (200) using a material screw (240).

12. Method (400) according to any one of claims 9-11, further comprising controlling (480) the feed of furnace fuel from the furnace fuel input (130) to the furnace (120) based on an output heat requirement from the heat converter (150).

13. Method (400) according to claim 12, further comprising, in situations where the control of the feed of furnace fuel from the furnace fuel input (130) to the furnace (120) does not suffice to reach the output heat requirement from the heat converter (150), controlling (485) the syngas output (230) to transport at least a part of the syngas from the biochar pyrolysis process into the furnace (120).

14. Method (400) according to any one of claims 9-13, further comprising controlling (490) the transport speed of the biochar base material through the biochar pyrolysis reactor chamber (200) based on the properties of the biochar base material.

15. Method (400) according to any one of claims 9-14, further comprising controlling (495) both the feed of furnace fuel from the furnace fuel input (130) to the furnace (120), and the transport speed of the biochar base material through the biochar pyrolysis reactor chamber (200), based on the desired output of the biochar pyrolysis process.
